# EUROPÄISCHE PATENTANMELDUNG

(11) **EP 3 154 117 A1**
(43) Veröffentlichungstag der Anmeldung: **12.04.2017**
(21) Anmeldenummer: 15189167.8
(22) Anmeldetag: 09.10.2015
(51) Int. Cl.: H01M 10/42, H01M 10/052

(54) **VORRICHTUNG ZUR ERHÖHUNG DER SICHERHEIT BEIM GEBRAUCH VON BATTERIESYSTEMEN**

(71) Anmelder: Lithium Energy and Power GmbH & Co. KG, 70469 Stuttgart (DE)
(72) Erfinder: Leuthner, Stephan, 71229 Leonberg (DE); Wurm, Calin Iulius, 86405 Meitingen (DE)
(74) Vertreter: Bee, Joachim

(57) **Zusammenfassung**

Die Erfindung geht aus von einer Batteriezelle (BZ), insbesondere einer Lithium-Ionen-Batteriezelle, wobei die Batteriezelle (BZ) ein Berührungssensorelement (S) zur Detektion von an dem Berührungssensorelement (S) anliegenden oder auf das Berührungssensorelement (S) Druck ausübenden Elementen (N) aufweist, wobei es sich bei dem Berührungssensorelement (S) um ein pyroelektrisches Sensorelement handelt.

## Beschreibung

### Feld der Erfindung

Die vorliegende Erfindung bezieht sich auf eine Vorrichtung und eine Batteriezelle, insbesondere eine Lithium-Ionen-Batteriezelle gemäß dem Oberbegriff der unabhängigen Patentansprüche. Die Erfindung bezieht sich ferner auf die Verwendung einer Batteriezelle gemäß einem unabhängigen Patentanspruch.

### Stand der Technik

Bei einem Defekt oder bei einer unsachgemäßen Handhabung kann es bei Batteriezellen, insbesondere bei Lithiumionenzellen, zur Gasbildung im Inneren der Batteriezelle kommen. Durch die Gasbildung entsteht ein Überdruck. Es ist bekannt, ein Überdruckventil oder eine Berstmembran in einem Gehäuse der Batteriezelle vorzusehen, um die entstandenen Gase abzuführen und ein thermisches Durchgehen der Batteriezelle zu vermeiden.

DE 199 36 063 A1 zeigt eine elektrochemische Sekundärzelle, die Elektroden und ein Elektrolytsystem in einem diese umschließenden Gehäuse aufweist. Am Gehäuse ist eine Detektoreinrichtung angebracht, mit der eine Formänderung des Gehäuses detektiert werden kann, die sich beispielsweise durch eine Gasentwicklung in der Batteriezelle ergibt. Als Detektororgan ist ein Piezoelement beschrieben.

DE 10 2008 053 011 A1 zeigt eine galvanische Batteriezelle für einen Akkumulator, bei der eine Sensoreinrichtung vorgesehen ist, mit der ein unerwünschter Zustand der galvanischen Batteriezelle detektiert werden kann. Als geeignete Sensoreinrichtungen sind zum Beispiel Temperaturmesseinrichtungen, Piezoelemente, Dehnmessstreifen oder andere Messeinrichtungen genannt. Diese sollen insbesondere dazu dienen, Verformungen des Gehäuses zu detektieren, wenn beispielsweise in der Batteriezelle eine Gasbildung und damit eine Druckerhöhung auftritt.

DE 10 2011 112 641 A1 zeigt ein Verfahren zum Prüfen einer Lithium-Ionen-Batteriezelle auf Funktionsfähigkeit, bei dem auf bestimmte Stellen des Gehäuses geschlagen wird, wodurch Schall entsteht. Dieser wird mit einem außerhalb der Batteriezelle angeordneten Mikrofon empfangen. Aus dem empfangenen Signal wird auf den Zustand der Batteriezelle geschlossen.

US 2007/122691 A1 zeigt eine flache Batteriezelle, welche mit einem piezoelektrischen Element in einem gemeinsamen Rahmen angeordnet ist. Das piezoelektrische Element detektiert Schwellungen der Batteriezelle aufgrund anormaler Operation oder Verschlechterung der Batteriezelle.

EP 2 549 580 A1 zeigt ein Batteriesystem mit einer Vielzahl von Batteriezellen und einem Batteriemanagementsystem zur Steuerung und Überwachung der Batteriezellen. In einem gemeinsamen Gehäuse ist zudem ein piezoelektrisches Element angeordnet, welches zur Detektion eines Abstands der Batteriezellen zum Gehäuse eingesetzt wird.

### Offenbarung der Erfindung

Die Erfindung geht aus von einer Batteriezelle, insbesondere einer Lithium-Ionen-Batteriezelle, wobei die Batteriezelle ein Berührungssensorelement zur Detektion von an dem Berührungssensorelement anliegenden oder auf das Berührungssensorelement Druck ausübenden Elementen aufweist.

Die Erfindung betrifft ferner die Verwendung einer Batteriezelle in einem Batteriesystem oder in einem Fahrzeug, insbesondere in einem Kraftfahrzeug.

Der Kern der Erfindung besteht darin, dass das Berührungssensorelement ein pyroelektrisches Sensorelement ist. Pyroelektrische Sensorelemente beruhen auf der Eigenschaft einiger piezoelektrischer Kristalle, auf eine zeitliche Temperaturänderung mit einer Ladungstrennung innerhalb der Kristalle zu reagieren. Die für die Erfindung in Frage kommenden pyroelektrischen Substanzen weisen Ionenstrukturen mit permanenter elektrischer Polarisation auf. Für den Fall einer durch Druckeinwirkung hervorgerufenen Temperaturveränderung der Ionenstruktur kommt es zu einer entgegengesetzten elektrischen Aufladung von einander gegenüberliegenden Flächen innerhalb der Ionenstruktur. Polyvinyldenfluorid kann beispielhaft als pyroelektrische Substanz in einem pyroelektrischen Sensorelement verwendet werden.

Hintergrund der Erfindung ist die Erhöhung der Sicherheit im Umgang mit Batteriezellen und die Vermeidung eines Eintretens eines sicherheitskritischen Zustands der Batteriezelle sowie die Verringerung von Auswirkungen eines sicherheitskritischen Zustands.

Ein sicherheitskritischer Zustand der Batteriezelle liegt beispielsweise dann vor, wenn die Batteriezelle beschädigt wird. Beispielsweise kann ein Eindringen eines elektrisch leitfähigen Gegenstands in die Batteriezelle zu einem elektrischen Kurzschluss innerhalb der Batteriezelle führen. Der elektrische Kurzschluss innerhalb der Batteriezelle stellt einen sicherheitskritischen Zustand dar. Darüber hinaus kann es zu einem unerwünschten Austreten von Substanzen aus der Batteriezelle kommen. Der sicherheitskritische Zustand geht mit der Erhöhung der Wahrscheinlichkeit einer Schädigung von Personen oder Gegenständen, die sich im Umfeld der Batteriezelle befinden, einher.

Der Umstand, dass es sich bei dem Berührungssensorelement um ein pyroelektrisches Sensorelement handelt, führt dazu, einen Gegenstand, insbesondere einen elektrisch leitfähigen Gegenstand, der durch Eindringen in das Innere der Batteriezelle gelangen kann, zeitlich schon vor seinem Eindringen in die Batteriezelle zu detektieren. Diese Detektion wird dadurch ermöglicht, dass der Gegenstand Druck auf das pyroelektrische Sensorelement ausübt. Schon bei einem sehr geringen Druck, also zu einem Zeitpunkt an dem der Gegenstand den Berührungssensor gerade berührt, aber noch nicht in die Batteriezelle eingedrungen ist, wird eine nachweisbare elektrische Aufladung innerhalb der Ionenstruktur der pyroelektrischen Substanz erzeugt. Auf Grund der elektrischen Aufladung wird ein elektrisches Signal erzeugt. Dieses elektrische Signal dient auf Grund des Umstands, dass es durch Druck auf das Berührungssensorelement hervorgerufen wird, zum Nachweis des druckausübenden Gegenstands.

Dadurch, dass der Gegenstand somit zeitlich schon vor seinem eigentlichen Eindringen in die Batteriezelle detektiert werden kann, können vor Eintreten eines sicherheitsrelevanten Zustands, beispielsweise eines möglichen elektrischen Kurzschlusses im Inneren der Batteriezelle, Sicherheitsmaßnahmen eingeleitet werden.
Zu den Sicherheitsmaßnahmen zählen beispielsweise das Einleiten einer vollständigen Entladung der Batteriezelle oder das Legen eines Strombypasses.

Weitere vorteilhafte Ausführungsformen der Erfindung sind Gegenstand der Unteransprüche.

Gemäß einer vorteilhaften Ausgestaltungsform der Erfindung handelt es sich bei dem pyroelektrischen Sensorelement um eine Kombination aus piezoelektrisch und pyroelektrisch sensierenden Folien. Durch die Verwendung einer Kombination von piezoelektrisch und pyroelektrisch sensierenden Folien kann die Wahrscheinlichkeit des Nachweises eines auf das Sensorelement Druck ausübenden Gegenstands weiter erhöht werden.

Gemäß einer weiteren vorzugsweisen Ausgestaltungsform der Erfindung ist das Berührungselement in eine Folie der Batteriezelle integriert, wobei die Folie außerhalb oder innerhalb der Batteriezelle angeordnet ist. Die Integration des Berührungselements in eine Folie führt zu dem erfindungsgemäßen Vorteil, das Berührungssensorelement platzsparend an verschiedenen Stellen der Batteriezelle einzusetzen. Eine Folie kann zudem durch ihre mechanische Flexibilität mechanische Einwirkungen, wie etwa Stöße, ausgleichen, damit ist der Betrieb des Berührungssensorelements auch unter hoher mechanischer Belastung der Batteriezelle sichergestellt. Die Anordnung der Folie innerhalb der Batteriezelle führt zu dem erfindungsgemäßen Vorteil, beispielsweise die Wahrscheinlichkeit des Eintritts eines elektrischen Kurzschlusses im Inneren der Batteriezelle nachweisen zu können, bevor dieser zu einer Schädigung der Batteriezelle führen kann.

Gemäß einer nächsten vorzugsweisen Ausgestaltungsform der Erfindung ist die Folie an einer Oberfläche eines Gehäuses der Batteriezelle angeordnet. Entsprechend einer nächsten vorzugsweisen Ausgestaltungsform der Erfindung wird die Folie auf die Oberfläche des Gehäuses der Batteriezelle gedruckt, geklebt oder laminiert.

Gemäß einer nächsten vorzugsweisen Ausgestaltungsform der Erfindung weist das Berührungssensorelement ferner ein resistives oder ein kapazitives Drucksensorelement auf. Durch den Umstand, dass das Berührungssensorelement ferner ein resistives oder ein kapazitives Drucksensorelement aufweist, wird die Wirksamkeit des Berührungssensorelementes weiter erhöht. Hintergrund dieser Erhöhung ist, dass durch die Sensierung mittels eines pyroelektrischen Sensorelementes und mittels eines resistiven oder kapazitiven Drucksensorelementes die Batteriezelle auf Grundlage zweier unterschiedlicher Wirkprinzipien überwacht wird. Durch die Überwachung der Batteriezelle auf Grundlage zweier unterschiedlicher Wirkprinzipien kann die Wahrscheinlichkeit einer irrtümlichen Detektion verringert werden. Darüber hinaus führt diese Ausgestaltungsform zu dem erfindungsgemäßen Vorteil, dass für den Fall, dass entweder das pyroelektrische Sensorelement oder das resistive oder das kapazitive Drucksensorelement defekt ist, die Batteriezelle dennoch überwacht wird.
Vorteilhaft bei kapazitiven Sensorelementen ist zudem, dass Gegenstände, die lediglich an dem kapazitiven Sensorelement anliegen, auf dieses aber keinen Druck ausüben, dennoch detektiert werden können. Ein weiterer Vorteil besteht darin, dass kapazitive Sensorelemente sehr präzise sind. Zudem sind sie beständig gegen Chemikalien und sehr unempfindlich gegen mechanische Belastungen. Resistive Sensorelemente bieten die Vorteile, vergleichsweise preiswert, sehr präzise und zudem weitestgehend unempfindlich gegen Feuchtigkeit zu sein.

Gemäß einer weiteren vorzugsweisen Ausgestaltungsform der Erfindung weist das Berührungssensorelement ferner ein Kurzschlusselement auf. Dabei weist das Kurzschlusssensorelement beispielsweise zwei elektrisch voneinander isolierte Metallfolien auf. Durch ein Eindringen des elektrisch leitfähigen Gegenstands in das Kurzschlusssensorelement wird ein elektrischer Kurzschluss zwischen den zwei elektrisch voneinander isolierten Metallfolien hergestellt. Durch die zusätzliche Verwendung des Kurzschlusssensorelements wird die Wirksamkeit der Überwachung der Batteriezelle weiter erhöht.

Gemäß einer nächsten vorzugsweisen Ausgestaltungsform der Erfindung ist das Berührungssensorelement mit einer Auswerteelektronik und/oder mit einer Sicherheitseinheit zum Einleiten sicherheitsrelevanter Aktionen verbunden. Mittels der Auswerteelektronik können die durch das Berührungssensorelement erzeugten Signale ausgewertet und weiterverarbeitet werden. Über die Auswerteelektronik kann insbesondere die Sicherheitseinheit angesteuert werden. Alternativ kann die Sicherheitseinheit direkt die durch das Berührungssensorelement erzeugten Signale auswerten und weiterverarbeiten. Die Sicherheitseinheit kann das Legen eines Strombypasses oder die vollständige Entladung der Batteriezelle bewirken.

### Kurze Beschreibung der Figuren

Nachfolgend wird die Erfindung anhand von Ausführungsbeispielen, aus denen sich weitere erfinderische Merkmale ergeben können, auf die die Erfindung aber in ihrem Umfang nicht beschränkt ist, erläutert. Die Ausführungsbeispiele sind in den Figuren dargestellt.

Es zeigt:
- Figur 1: die schematische Darstellung einer erfindungsgemäßen Batteriezelle gemäß einer ersten Ausführungsform;
- Figur 2: die schematische Darstellung einer erfindungsgemäßen Batteriezelle gemäß einer zweiten Ausführungsform;
- Figur 3: die schematische Darstellung eines Druckverlaufs innerhalb einer Batteriezelle;
- Figur 4: die schematische Darstellung eines beispielhaften Eindringens eines Gegenstands in eine Batteriezelle.

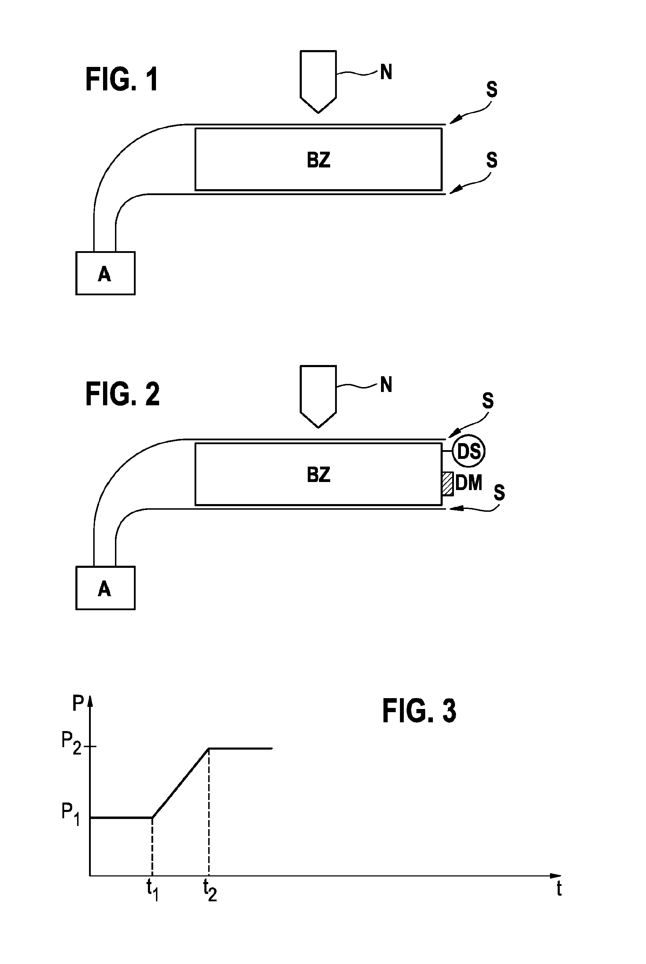

In Figur 1 ist eine erfindungsgemäße Batteriezelle BZ gemäß einer ersten Ausführungsform schematisch dargestellt. Bei der Batteriezelle BZ kann es sich insbesondere um eine Lithium-Ionen-Batteriezelle handeln. Mit S wird ein Berührungssensorelement bezeichnet, wobei das Berührungssensorelement S zur Detektion von an dem Berührungssensorelement S anliegenden oder auf das Berührungssensorelement S Druck ausübenden Elementen geeignet ist. Bei dem Berührungssensorelement S handelt es sich um ein pyroelektrisches Sensorelement. Mit N wird ein elektrisch leitfähiger Gegenstand bezeichnet, wobei es sich bei dem elektrisch leitfähigen Gegenstand N insbesondere um einen Nagel oder um einen metallischen Gegenstand handelt, der in der Lage ist, in die Batteriezelle BZ einzudringen. Der elektrisch leitfähige Gegenstand N kann durch ein Eindringen in die Batteriezelle BZ einen sicherheitskritischen Zustand der Batteriezelle BZ verursachen. Ein solcher sicherheitskritischer Zustand kann beispielsweise darin bestehen, dass es zu einem Kurzschluss innerhalb der Batteriezelle BZ kommt oder dass Substanzen aus der Batteriezelle BZ unkontrolliert in die Umgebung der Batteriezelle BZ gelangen können. Der elektrisch leitfähige Gegenstand N übt vor seinem Eindringen in die Batteriezelle BZ zunächst Druck auf das Berührungssensorelement S aus.

Dadurch, dass es sich bei dem Berührungssensorelement S um ein pyroelektrisches Sensorelement handelt, kann der Umstand, dass sich der elektrisch leitfähige Gegenstand N der Batteriezelle BZ nähert und in diese einzudringen droht, zeitlich schon vor dessen Eindringen in die Batteriezelle BZ detektiert werden. Durch das Ausüben eines Druckes auf das pyroelektrische Berührungssensorelement S wird ein elektrisches Signal erzeugt, dass mittels einer Auswerteelektronik A ausgewertet und verarbeitet werden kann. Die Auswerteelektronik A ist zu diesem Zweck mit dem Berührungssensorelement S verbunden. In Abhängigkeit der Verarbeitung des elektrischen Signals durch die Auswerteelektronik A können sicherheitsrelevante Maßnahmen eingeleitet werden. Bei den sicherheitsrelevanten Maßnahmen kann es sich beispielsweise um eine vollständige Entladung der Batteriezelle BZ handeln, oder es kann sich um das Legen eines Strombypasses handeln.
Vorzugsweise wird das Berührungssensorelement S an der gesamten Oberfläche der Batteriezelle BZ angeordnet um ein vollständige Überwachung der Batteriezelle zu gewährleisten.

Zusätzlich können zusätzlich weitere Drucksensoren, wie beispielsweise Dehnungsmessstreifen, verwendet werden, um das Eindringen eines elektrisch leitfähigen Gegenstands N nachzuweisen.

In Figur 2 ist eine erfindungsgemäße Batteriezelle BZ gemäß einer zweiten Ausführungsform schematisch dargestellt. Im Unterschied zu der in Figur 1 dargestellten Ausführungsform sind zusätzlich ein Dehnungsmessstreifen DM und ein Drucksensor DS an der Batteriezelle BZ angeordnet. Mittels des Dehnungsmessstreifens DM und des Drucksensors DS können physische Veränderungen der Batteriezelle BZ, die durch den insbesondere elektrisch leitfähigen Gegenstand N hervorgerufen werden, erfasst werden. Durch die Verwendung des Dehnungsmessstreifens DM und des Drucksensors DS kann somit eine Detektion des Eindringens oder Berührens eines insbesondere elektrisch leitfähigen Gegenstands N mittels des Berührungssensorelements S bestätigt und überprüft werden.

In Figur 3 ist ein Druckverlauf innerhalb einer Batteriezelle BZ schematisch dargestellt. Aufgetragen ist der Druck P gegenüber der Zeit t. Bis zum Zeitpunkt t₁ herrscht ein regulärer Druck P₁ innerhalb der Batteriezelle BZ. Der reguläre Druck P₁ ist von den chemischen und physikalischen Verhältnissen, zum Beispiel der Temperatur, innerhalb der Batteriezelle BZ abhängig. Zum Zeitpunkt t₁ beginnt ein Gegenstand N auf ein Berührungssensorelement S Druck auszuüben. Der Druck nimmt linear zu, bis zu einem Zeitpunkt t₂. Zum Zeitpunkt t₂ übt der Gegenstand N einen derart hohen Druck P₂ auf die Batteriezelle BZ aus, dass es zu einer plastischen Verformung eines Gehäuses der Batteriezelle BZ kommen kann. Dieser Druckverlauf ist mittels pyroelektrischer Sensorelemente und beispielsweise mittels einer Kombination eines pyroelektrischen Sensorelements und eines Dehnungsmessstreifens, die an dem Gehäuse der Batteriezelle BZ angeordnet ist, nachzuweisen. Je früher ein solcher Druckverlauf nachgewiesen werden kann, desto eher können Sicherheitsmaßnahmen eingeleitet werden, um die Schädigung der Batteriezelle BZ zu begrenzen.

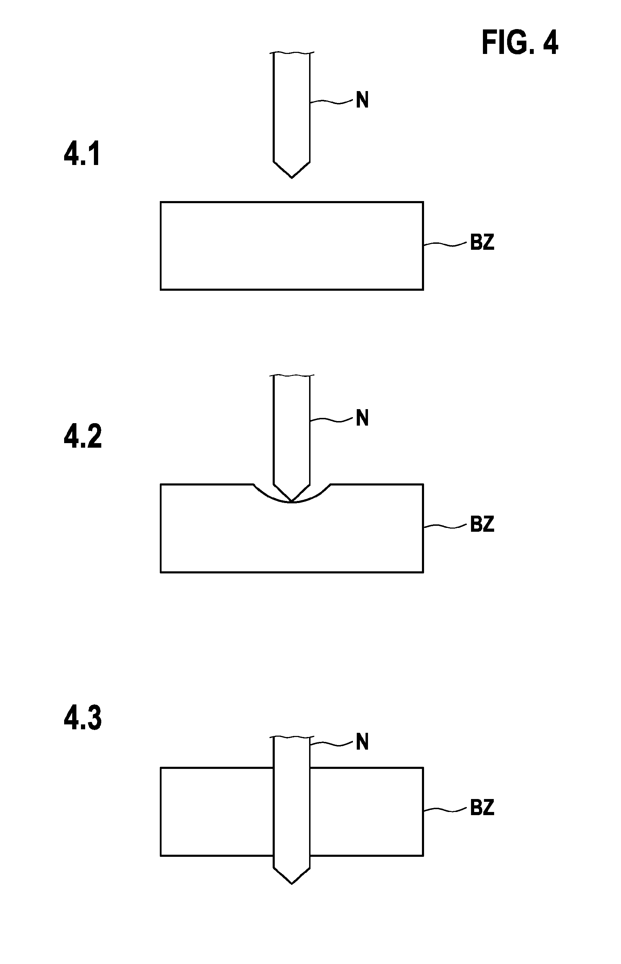

In Figur 4 ist das beispielhafte Eindringen eines Gegenstands in eine Batteriezelle BZ schematisch dargestellt. Bei dem Gegenstand kann es sich um den insbesondere elektrisch leitfähigen Gegenstand N handeln.

In Teilfigur 4.1 ist der Zustand der Batteriezelle BZ dargestellt, in dem der elektrisch leitfähige Gegenstand N die Batteriezelle BZ noch nicht berührt. Innerhalb der Batteriezelle BZ herrscht der reguläre Druck P₁.

In Teilfigur 4.2 ist der Zustand der Batteriezelle BZ dargestellt, in dem der Gegenstand N Druck auf die Batteriezelle auszuüben beginnt. Die Oberfläche der Batteriezelle BZ beginnt sich zu verformen. Der Druck innerhalb der Batteriezelle BZ beginnt zu steigen.

In Teilfigur 4.3 ist der Zustand der Batteriezelle BZ dargestellt, in dem der Gegenstand N die Batteriezelle BZ vollkommen durchdrungen hat.

## Patentansprüche

1. Batteriezelle (BZ), insbesondere Lithium-Ionen-Batteriezelle, wobei die Batteriezelle (BZ) ein Berührungssensorelement (S) zur Detektion von an dem Berührungssensorelement (S) anliegenden oder auf das Berührungssensorelement (S) Druck ausübenden Elementen (N) aufweist, **dadurch gekennzeichnet, dass** es sich bei dem Berührungssensorelement (S) um ein pyroelektrisches Sensorelement handelt.

2. Batteriezelle (BZ) nach Anspruch 1, **dadurch gekennzeichnet, dass** es sich bei dem pyroelektrischen Sensorelement (S) um eine Kombination aus einer piezoelektrischen Sensoreinheit und einer pyroelektrischen Sensoreinheit handelt.

3. Batteriezelle (BZ) nach Anspruch 1 oder 2, **dadurch gekennzeichnet, dass** das Berührungssensorelement (S) in eine Folie (F) der Batteriezelle (BZ) integriert ist, wobei die Folie (F) außerhalb oder innerhalb der Batteriezelle (BZ) angeordnet ist.

4. Batteriezelle (BZ) nach Anspruch 3, **dadurch gekennzeichnet, dass** die Folie (F) an einer Oberfläche eines Gehäuses der Batteriezelle (BZ) angeordnet ist.

5. Batteriezelle (BZ) nach Anspruch 4, **dadurch gekennzeichnet, dass** die Folie (F) auf die Oberfläche des Gehäuses der Batteriezelle (BZ) gedruckt, geklebt oder laminiert worden ist.

6. Batteriezelle (BZ) nach einem der vorhergehenden Ansprüche, **dadurch gekennzeichnet, dass** das Berührungssensorelement (S) ferner ein resistives oder ein kapazitives Drucksensorelement aufweist.

7. Batteriezelle (BZ) nach einem der vorhergehenden Ansprüche, **dadurch gekennzeichnet, dass** das Berührungssensorelement (S) ferner ein Kurzschlusssensorelement aufweist, wobei das Kurzschlusssensorelement insbesondere zwei elektrisch voneinander isolierte Metallfolien aufweist.

8. Batteriezelle (BZ) nach einem der vorhergehenden Ansprüche, **dadurch gekennzeichnet, dass** das Berührungssensorelement (S) mit einer Auswerteelektronik (A) und/oder mit einer Sicherheitseinheit zum Einleiten sicherheitsrelevanter Aktionen verbunden ist.

9. Verwendung einer Batteriezelle (BZ) nach einem der Ansprüche 1 bis 8 in einem Batteriesystem oder in einem Fahrzeug, insbesondere in einem Kraftfahrzeug.
